# EUROPEAN PATENT SPECIFICATION

(11) **EP 4 339 636 B1**
(45) Date of publication and mention of the grant of the patent: **16.09.2026**
(21) Application number: 22806312.9
(22) Date of filing: 24.03.2022
(51) Int. Cl.: G01S 7/481, B60R 11/00, B60R 11/04, G01S 17/931, G01S 7/497

(54) **CONCEALED INTEGRATED DEVICE OF CORNER LASER RADARS, AND VEHICLE HAVING SAME**
VERBORGENE INTEGRIERTE VORRICHTUNG VON ECKLASERRADAREN UND FAHRZEUG DAMIT
DISPOSITIF INTÉGRÉ CACHÉ DE CINÉMOMÈTRES LASER DE COIN ET VÉHICULE ÉQUIPÉ DUDIT DISPOSITIF

(30) Priority: 12.05.2021 CN 202121029038 U
(43) Date of publication of application: 20.03.2024
(73) Proprietor: Wuhan Lotus Cars Co., Ltd., Wuhan, Hubei 430056 (CN)
(72) Inventor: LI, Hongshuang, Wuhan, Hubei 430056 (CN); LIU, Shaoyan, Wuhan, Hubei 430056 (CN); LI, Bo, Wuhan, Hubei 430056 (CN); ZHU, Yongqing, Wuhan, Hubei 430056 (CN); WANG, Yanhong, Wuhan, Hubei 430056 (CN); HE, Shichao, Wuhan, Hubei 430056 (CN); LONG, Xiange, Wuhan, Hubei 430056 (CN); WEI, Qunxiong, Wuhan, Hubei 430056 (CN)
(74) Representative: Zaboliene, Reda
(86) International application number: PCT/CN2022/082890
(87) International publication number: WO 2022/237342

(56) References cited:
- EP-A1- 2 003 471
- CN-A- 111 409 739
- CN-A- 111 409 739
- CN-A- 112 477 768
- CN-U- 209 879 739
- CN-U- 209 879 739
- CN-U- 210 894 691
- CN-U- 212 473 304
- CN-U- 216 052 167
- US-A1- 2021 123 778
- US-A1- 2021 123 778

## Description

### TECHNICAL FIELD

The present invention relates to the technical field of laser radars, and in particular to a concealed corner laser radar integration device and a vehicle having same.

### BACKGROUND

Laser radars are important sensors for achieving high-level intelligent driving and autonomous driving. Using laser radars can compensate for the shortcomings of cameras and millimeter wave radars: compared with cameras, they can build more realistic 3D environments without relying on ambient light, and have higher resolutions and more accurate object recognition ability compared with millimeter wave radars.

Currently, laser radars are limited by volumes of lasers and areas of laser emitting (receiving) mirrors, their overall sizes are larger than that of cameras and millimeter wave radars, making it difficult to arrange them on entire vehicles and susceptible to limitations in layout and styling.

Horizontal view field angles (view field ranges for sensing point cloud information) of laser radars are generally around 120 degrees. In order to perceive a 360 degree horizontal field of view, the prior art usually requires 4-5 laser radars for view field splicing. Corner laser radars, as the name suggests, are generally mounted at corners, or sides, or lower positions at both sides of front and rear bumpers, of a vehicle body, to be responsible for sensing lateral field of view and serve as a supplement to the fields of view of forward and backward laser radars, thereby achieving a 360 degree horizontal field of view of laser radars.

CN 111409739A discloses a retractable installation structure including a telescopic rod for radar telescopic and a fixed bracket for fixing the telescopic rod. The protective cover structure includes a driving device for a protective cover switch, a protective cover and an opening on the vehicle body. The telescopic rod moves linearly along a direction perpendicular to the plane where the opening of the vehicle body is located. The protective cover is retractable under the drive of the driving device and covers the radar when the radar is shrunk into the accommodation cavity in the vehicle body.

EP 2003471A1 discloses a radar which is retractable along a length direction of the vehicle, a cover is equipped for covering the radar when the radar is retracted, and a cleaning device is equipped for cleaning the radar when the radar is dirty.

US 2021123778A1 discloses a cover which is slidable in up and down movement under the drive of a sliding device. The sliding device includes a motor, a gear assembly, and a sliding part coupled to the cover so as to be slid by the gear assembly. When the motor operates, the rotation movement of output shaft of the motor may be converted into a sliding movement of the cover.

CN 209879739U discloses a cleaning apparatus for cleaning a traffic camera when the traffic camera is dirty. The cleaning apparatus includes a telescopic rod and a spray disposed on the telescopic rod. A flexible tube is wound around the telescopic rod. An end of the flexible tube is connected to a water container through a pump, and the other end of the flexible tube is connected to the spray. If a scheduled cleaning time is reached, the telescopic rod, the spray and the flexible tube works to clean the camera.

### SUMMARY OF THE DISCLOSURE

### Technical problems

There are some defects in the technical solutions in the prior art.
1. A device that fixes a laser radar to a vehicle body is relatively simple in appearance and has a significant impact on the design, it is unable to reflect technological sense of autonomous driving usage scenarios and heat dissipation issues of the laser radar will be caused.
2. A horizontal view field angle of a laser radar is generally around 120 degrees, and the arrangement plan of 4-5 laser radars will cause waste of the view field angle. Moreover, laser radars are expensive, with a single cost usually greater than 5000 RMB, such an arrangement manner is not conducive to the overall cost of a vehicle.
3. Regarding the arrangement at lower positions of sides and corners of front and rear bumpers, these positions are collision prone areas; combined with the characteristic of the high cost of laser radars, such an arrangement manner is not conducive to the economy of maintenance for an entire vehicle.
4. Laser radars adopt a fixed scheme, with lenses exposed to the outside; while the laser radars' lenses are mostly made of PC or glass material, with hardnesses less than that of sand and gravel, and a higher risk of scratches during use.

### Technical solutions

In view of this, the present invention provides a concealed corner laser radar integration device and a vehicle having same, which reduce the number of corner laser radars from 4-5 to 2, such that a cost advantage exists. The arrangement is at positions on a front fender, such that the risk of collision is reduced compared with that of the arrangement at positions of front and rear bumpers. A concealed cleaning system is integrated so as to improve users' experience; at the same time, the requirement for beauty of a roof design is met, and a sense of technology of a vehicle is enhanced.

The present invention provides a concealed corner laser radar integration device comprises at least a cover plate, a fixed support, a lifting structure, an ejection structure, a laser radar, and a controller; wherein the cover plate is located on a fender of a vehicle body and matches an opening of the fender in terms of size; the fixed support, the lifting structure, the ejection structure, the laser radar, and the controller are all located inside the fender; the lifting structure is arranged on the fixed support and is connected to the cover plate, and can drive the cover plate to move upward and downward under control of the controller; the laser radar is arranged on the ejection structure; the ejection structure is arranged on the fixed support and can move outward relative to the fixing support under control of the controller to push the laser radar out from the inside of the fender. The ejection structure comprises a second motor, a decelerator, a second gear, a movement plate, and a movement rod; an output shaft of the second motor is connected to the decelerator, the decelerator is connected to the second gear; the movement plate meshes with the second gear and is swingable under the drive of the second gear, the movement plate is placed on the fixing support and capable of swing inwards and outwards relative to the fixing support under the drive of the movement rod, when the movement plate is rotated out relative to the fixing support, the movement plate forms a preset angle with an outside edge of the connection plate; the laser radar and the cleaning structure are mounted on the movement plate, the radar is mounted on the movement plate.

Furthermore, the fixing support comprises first fixing plates and a connection plate, the first fixing plates are located at two sides of the connection plate, and the first fixing plates are fixed to a front body longitudinal beam at an inner side of the fender through bolts.

Furthermore, the lifting structure comprises at least a first motor, a transmission shaft, a first gear, a screw rod, a lifting rod, a sliding rail, a fixing block, and a second fixing plate; the sliding rail inclines upward and inward from a lower part of the fixing support, a bottom end thereof is fixed to the connection plate, and the fixing block is arranged at a top end thereof; the screw rod passes through the fixing block and is arranged parallel to the sliding rail, the lifting rod is arranged at a lower end thereof, the first gear is fixed at a top part of the screw rod, and the lifting rod is connected to the cover plate; the first motor and the controller are fixed on the second fixing plate, the first motor is connected to the transmission shaft, and the transmission shaft meshes with the first gear.

Furthermore, the fixing block is connected to the screw rod by screw thread; the lifting rod comprises a first lifting rod and a second lifting rod, the first lifting rod is sleeved on and connected by screw thread to a lower end of the screw rod, and the second lifting rod has one end connected to the first lifting rod and another end fixedly connected to a bottom end of a side of the cover plate.

Furthermore, a cleaning structure is included, and the cleaning structure is arranged on the ejection structure together with the laser radar.

Furthermore, the cleaning structure comprises at least a fixing bracket, an electromagnetic valve, a nozzle, a connection part, and a water inlet; the electromagnetic valve has one end connected to the connection part and another end connected to the water inlet, the water inlet is connected to a pipeline which is connected to a waterway of an entire vehicle; the nozzle is connected to the connection part and has a telescoping function.

Furthermore, the ejection structure comprises a sealing strip; the sealing strip is mounted at a front side of the movement plate.

Furthermore, the movement plate is provided with a hole, the movement rod comprises a first movement rod and second movement rod, the second movement rod is connected to the first movement rod by a preset angle; a lower part of an end of the first movement rod is provided with a convex column, the convex column is clamped with the hole; the second movement rod is arc-shaped, an outside section thereof is provided with teeth, the teeth mesh with the second gear.

Furthermore, one side of the laser radar is fixed with a mirror, and the other side is equipped with a second wire harness, the second wire harness is connected to an autonomous driving domain controller or an advanced auxiliary driving domain controller.

The present invention further provides a vehicle, the vehicle comprises the aforementioned concealed corner laser radar integration device.

### Advantageous effects

The present invention provides a concealed corner laser radar integration device, which adopts a concealed scheme. The laser radars can retract into a vehicle body in a standby state to avoid generating effect on an appearance design and reduce the risk of being scratched by sand and gravel; when an autonomous driving function is activated, the laser radars are rotated out and reach working positions to enhance a sence of technology. The concealed cleaning structure is integrated, cleanliness of the mirrors of the laser radars are always maintained during autonomous driving, the frequency of manual cleaning is greatly reduced, and users' experience is improved. The number of the corner laser radars is reduced from 4-5 to 2, such that a cost advantage exists. The arrangement is at positions on a front fender, the risk of collision is reduced compared with that of positions of front and rear bumpers.

### BRIEF DESCRIPTION OF THE DRAWINGS

FIG. 1 is a schematic view of mounting positions of a concealed corner laser radar integration device of the present invention on a vehicle body.
FIG. 2 is an overall structural schematic view of a concealed corner laser radar integration device of the present invention.
FIG. 3 is a structural schematic view of a lifting structure in the present invention.
FIG. 4 is a schematic view of a cleaning structure in the present invention.
FIG. 5 is a structural schematic view of a fixing bracket in the present invention.
FIG. 6 is a schematic view of an ejection structure in the present invention.
FIG. 7 is a top view of laser radars in a turning-on state in the present invention.

### DETAILED DESCRIPTION

In the description of the present invention, it should be noted that orientations or position relationships indicated in this description are based on orientations or position relationships shown in the accompanying drawings, and are only for the convenience of describing the present invention and simplifying the description, rather than indicating or implying that devices or elements referred to must have specific orientations or be constructed and operated in specific orientations, and therefore cannot be understood as any limitation to the present invention.

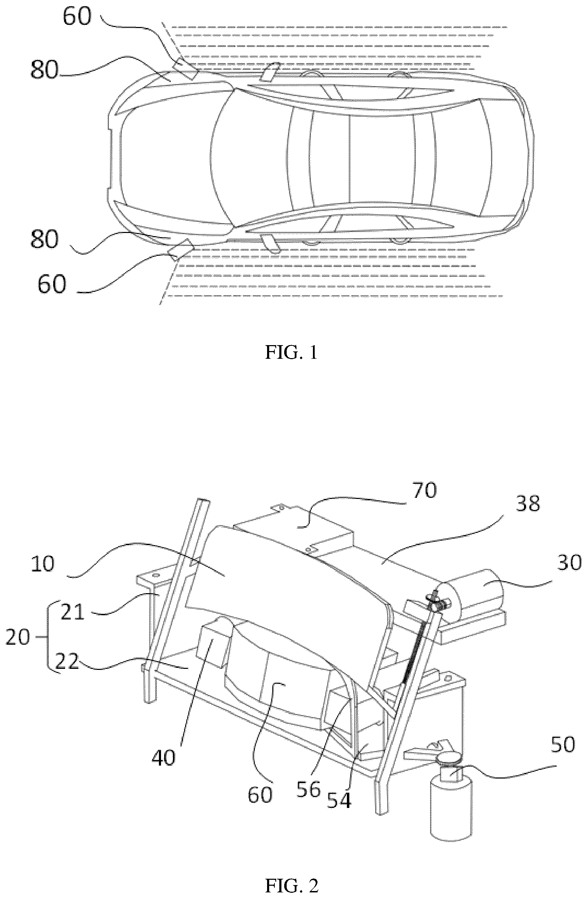

Referring to FIG. 1 and FIG. 2, a concealed corner laser radar integration device provided by the present invention includes at least a cover plate 10, a fixed support 20, a lifting structure 30, a cleaning structure 40, an ejection structure 50, a laser radar 60, and a controller 70. The cover plate 10 is located on a fender 80 of a vehicle body and matches an opening of the fender 80 in terms of size. The fixed support 20, the lifting structure 30, the cleaning structure 40, the ejection structure 50, the laser radar 60, and the controller 70 are all located inside the fender 80. The lifting structure 30 is arranged on the fixed support 20 and is connected to the cover plate 10, and can drive the cover plate 10 to move upward and downward under control of the controller 70; the laser radar 60 is arranged on the ejection structure 50; the ejection structure 50 is arranged on the fixed support 20 and can move outward relative to the fixing support 20 under control of the controller 70 to push the laser radar 60 out from the inside of the fender 80. The cleaning structure 40 is arranged on the ejection structure 50 together with the laser radar 60, the controller 70 is located above the laser radar 60 and is connected to an autonomous driving domain controller or an advanced auxiliary driving domain controller through a first wire harness.

Specifically, referring to FIG. 2 again, the fixing support 20 includes first fixing plates 21 and a connection plate 22, the first fixing plates 21 are located at two sides of the connection plate 22, and the first fixing plates 21 are fixed to a front body longitudinal beam at an inner side of the fender 80 through bolts.

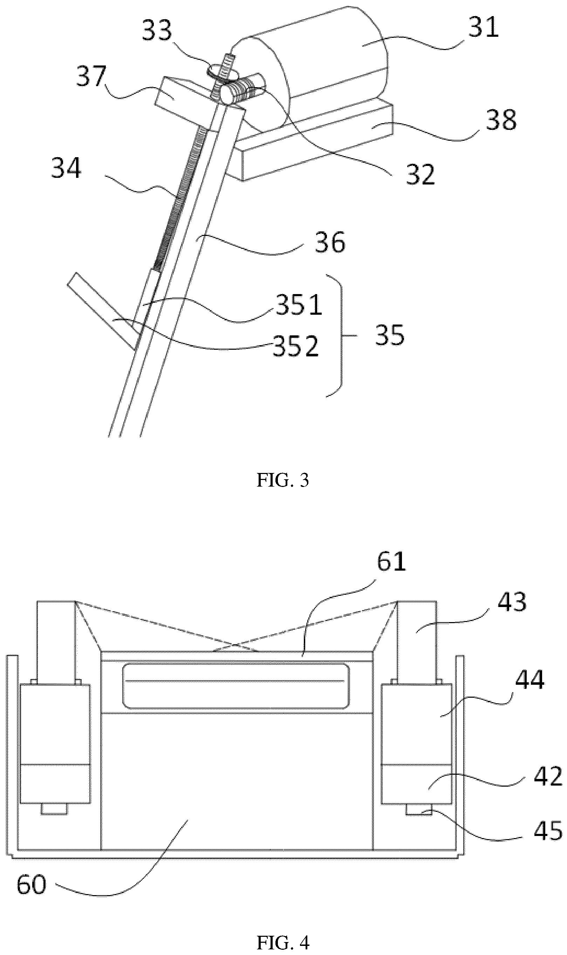

Specifically, referring to FIG. 2 and FIG. 3, the lifting structure 30 includes at least a first motor 31, a transmission shaft 32, a first gear 33, a screw rod 34, a lifting rod 35, a sliding rail 36, a fixing block 37, and a second fixing plate 38.

Furthermore, the sliding rail 36 extends inclinedly upward and inward from a lower part of the fixing support 20, a bottom end thereof is fixed to the connection plate 22, and the fixing block 37 is arranged at a top end thereof. The screw rod 34 passes through the fixing block 37 and is arranged parallel to the sliding rail 36, the fixing block 37 is connected to the screw rod 34 by screw thread, and the screw rod 34 has a lower end being provided with the lifting rod 35 and a top end fixed with the first gear 33. The lifting rod 35 includes a first lifting rod 351 and a second lifting rod 352, the first lifting rod 351 is sleeved on and connected by screw thread to the lower end of the screw rod 34, and the second lifting rod 352 has one end connected to the first lifting rod 351 by a preset angle and another end fixedly connected to a bottom end of a side of the cover plate 10. The first motor 31 and the controller 70 are fixed on the second fixing plate 38, the motor 31 is connected to the transmission shaft 32, and the transmission shaft 32 meshes with the first gear 33. When the first motor 31 rotates forward, it drives the transmission shaft 32 to rotate, the transmission shaft 32 drives the first gear 33 to rotate, and the first gear 33 drives the screw rod 34 to rotate. The first lifting rod 351 performs upward movement relative to the screw rod 34, and drives the second lifting rod 352 and the cover plate 10 to perform upward movement; the cover plate 10 is opened, the laser radar 60 and the cleaning structure 40 are ejected out of the fender 80 under drive of the ejection structure 50. When the first motor 31 rotates reversely, the movement process is opposite to the forward rotation, the cover plate 10 undergoes a downward motion, and the laser radar 60 and the cleaning structure 40 are retracted into the interior of the fender 80 under drive of the ejection structure 50.

It should be noted that the lifting structure 30 is not limited to the lifting structure 30 described in the forgoing description. Any device with the lifting function can replace the lifting structure 30 described in the forgoing description. Specific structures of lifting structures in the prior art will not be repeated in the present invention.

Specifically, referring to FIG. 2, FIG. 4, and FIG. 5, the cleaning structure 40 includes at least a fixing bracket 41, an electromagnetic valve 42, a nozzle 43, a connection part 44, and a water inlet 45; the laser radar 60 is arranged on the fixing bracket 41, and two side of the fixing bracket 41 are respectively provided with a set of combination structure 411 including an electromagnetic valve 42, a nozzle 43, a connection part 44, and a water inlet 45. Specifically, the electromagnetic valve 42 has one end connected to the connection part 44 and another end connected to the water inlet 45 to control the water inlet 45 to be turned on and off, the water inlet 45 is connected to a pipeline which is connected to a waterway of an entire vehicle. The nozzle 43 is connected to the connection part 44, and the nozzle 43 has a telescoping function. It retracts back to the interior of the connection part 44 when not being used and extends out of the connection part 44 by action of water pressure during use.

It should be noted that the nozzle 43 not only can be a telescopic structure that can extend out of or retract into the connection part 44, but also can be a fixed structure that is directly fixed to the connection part 44 and does not move relative to the connection part 44. The nozzle 43 is in a telescopic style.

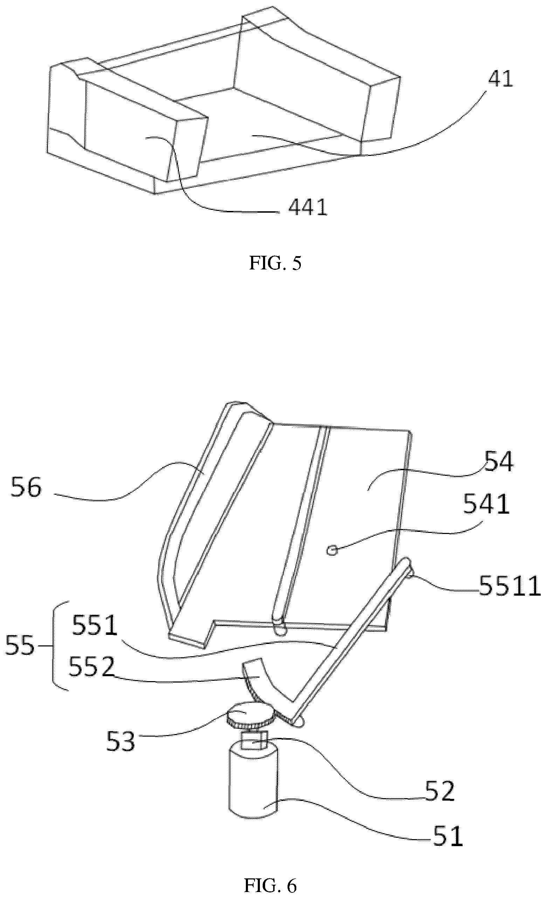

Specifically, referring to FIG. 2 and FIG. 6, the ejection structure 50 includes at least a second motor 51, a decelerator 52, a second gear 53, a movement plate 54, a movement rod 55, and a sealing strip 56.

Furthermore, the second motor 51 is fixed in the interior of the fender 80, its output shaft is connected to the decelerator 52, and the decelerator 52 is connected to the second gear 53. The movement plate 54 is placed on the connection plate 22 of the fixing support 20 and can swing inwards and outwards relative to the fixing support 20. When the movement plate 54 is rotated out relative to the fixing support 20, the movement plate 54 forms a preset angle with an outside edge support of the connection plate 22, for example, it is at a 30 degree angle. The laser radar 60 and the cleaning structure 40 are mounted on the movement plate 54, the movement plate 54 is further provided with a hole 541. The movement rod 55 includes a first movement rod 551 and a second movement rod 552, the first movement rod 551 passes through a slot at the first fixing plate 21 close thereto, and can swing relative to the first fixing plate 21. A lower part of an end of the first movement rod 551 is provided with a convex column 5511, the convex column 5511 is clamped with the hole 541 of the movement plate 54; the second movement rod 552 is arc-shaped, an outside section thereof is provided with teeth, which mesh with the second gear 53. The second movement rod 552 is connected to the first movement rod 551 by a preset angle, the sealing strip 56 can be mounted at a front side of the movement plate 54, and can also be fixed around an inner opening of the fender 80; the sealing strip 56 is mounted at the front side of the movement plate 54. When the second motor 51 rotates forward, under drive of the second motor 51 and the decelerator 52, the second gear 53 rotates to drive the second movement rod 552 to rotate, and further drives the first movement rod 551 to rotate. The movement plate 54 connected to the first movement rod 551, the laser radar 60, and the cleaning structure 40 are rotated out and ejected to the exterior of the fender 80. At this time, the sealing strip 56 fits around the opening in the fender 80, the sealing strip 56 has a waterproof function, which can prevent sewage from splashing into the interior of the fender 80 when the cleaning structure 40 is working. When the second motor 51 rotates reversely, the movement plate 54, the laser radar 60, and the cleaning structure 40 are retracted into the interior of the fender 80.

It should be noted that the ejection structure 50 is not limited to the ejection structure 30 described in the forgoing description. Any device with the ejection function can replace the ejection structure 50 described in the forgoing description. Specific structures of ejection structures in the prior art will not be repeated in the present invention.

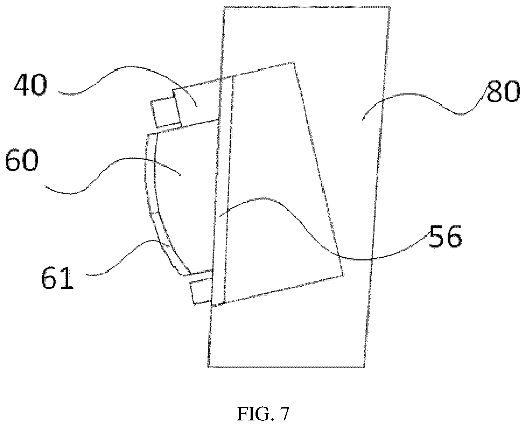

Specifically, referring to FIG. 4 and FIG. 7, a working side of the laser radar 60 is fixed with a mirror 61, and the other side is connected with a second wire harness, the second wire harness is connected to an autonomous driving or advanced auxiliary driving domain controller. When the laser radar 60 detects that the mirror 61 is affected by dirt, the second wiring harness can transmit a signal to the autonomous driving or advanced auxiliary driving domain controller, the autonomous driving or advanced auxiliary driving domain controller sends a cleaning signal to the electromagnetic valve 42. The electromagnetic valve 42 is opened, and the nozzle 43 sprays water onto the mirror 61 to perform cleaning work. The nozzle 43 in FIG. 4 is a state diagram when extended, and the dashed line represents the water spraying range, that is, the water sprayed from the nozzles 43 on both sides can cover the entire mirror 61.

It should be noted that, referring to FIG. 1 and FIG. 7, the concealed corner laser radar integration device provided by the present invention is mounted on the fenders 80 on both sides of a front end of a vehicle body, with a working angle forming an included angle of 30 degrees with a forward direction of the vehicle body, and can perceive a horizontal field of view of 120 degrees.

The working principle of the concealed corner laser radar integration device provided by the present invention is as follows: when a user has a driving need, the autonomous driving or advanced auxiliary driving domain controller sends a turning-on signal for the integrated device of corner laser radars, the controller 70 in the integrated device first drives the first motor 31 to rotate forwards. The lifting structure 30 starts to work, and under rotation of the transmission shaft 32, the first gear 33, and the screw rod 34, the first lifting rod 351 and the second lifting rod 352 drive the cover plate 10 to ascend and open the concealing opening. Afterwards, the controller 70 drives the second motor 51 to rotate forwards, the ejection structure 50 starts to work; under drive of the decelerator 52 and the second gear 53, the second movement rod 552 generates rotation, the first movement rod 551 drives the movement plate 54 to move, the laser radar 60 and the cleaning structure 40 are ejected to the exterior of the fender 80 and form an angle of 30 degrees with a forward direction of a vehicle body, the laser radar 60 starts to work. When the laser radar 60 detects that the mirror 61 is affected by dirt, it transmits a dirt signal to the autonomous driving or advanced auxiliary driving domain controller, the autonomous driving or advanced auxiliary driving domain controller sends a cleaning signal to the controller 70 in the integrated device, and the autonomous driving or advanced auxiliary driving domain controller drives a cleaning pump to pressurize a waterway; after a delay for a period of time, the controller 70 in the integrated device drives the cleaning structure 40 to work, the electromagnetic valve 42 is opened, and the nozzle 43 sprays water to clean the mirror 61 of the laser radar 60; when cleaning ends, the electromagnetic valve 42 is closed. When exiting the driving function, the autonomous driving or advanced auxiliary driving domain controller sends a turning-off signal for the integrated device of corner laser radars, the controller 70 in the integrated device drives the first motor 31 and the second motor 51 to rotate reversely, the integrated device of corner laser radars is turned off and concealed into the fender 80.

From the above description, it can be known that the concealed corner laser radar integration device provided by the present invention has the following advantages that: by adopting the concealed scheme, the laser radars can retract into the vehicle body in a standby state to avoid generating effect on an appearance design and reduce the risk of being scratched by sand and gravel; when an autonomous driving function is activated, the laser radars are rotated out and reach working positions to enhance a sence of technology. The concealed cleaning structure is integrated, cleanliness of the mirrors of the laser radars are always maintained during autonomous driving, the frequency of manual cleaning is greatly reduced, and users' experience is improved. The number of the corner laser radars is reduced from 4-5 to 2, such that a cost advantage exists. The arrangement is at positions on the front fender, the risk of collision is reduced compared with that of positions of front and rear bumpers.

The present invention further provides a vehicle, which includes the above-described concealed corner laser radar integration device. Other technical features of the vehicle can refer to the prior art and are not repeated here.

## Claims

1. A concealed corner laser radar integration device comprising a cover plate (10), a fixed support (20), a lifting structure (30), an ejection structure (50), a laser radar (60), and a controller (70), **characterised in that**
the cover plate (10) is configured to be located on a fender (80) of a vehicle body and match an opening of the fender (80) in terms of size; the fixed support (20), the lifting structure (30), the ejection structure (50), the laser radar (60), and the controller (70) are all configured to be located inside the fender (80); the fixed support (20) comprises a connection plate (22); the lifting structure (30) is arranged on the fixed support (20) and is connected to the cover plate (10), and configured to drive the cover plate (10) to move upward and downward under control of the controller (70); the laser radar (60) is arranged on the ejection structure (50); the ejection structure (50) is arranged on the fixed support (20) and configured to move outward relative to the fixing support (20) under control of the controller (70) to push the laser radar (60) out from the inside of the fender (80);
the ejection structure (50) comprises a second motor (51), a decelerator (52), a second gear (53), a movement plate (54), and a movement rod (55); an output shaft of the second motor (51) is connected to the decelerator (52), the decelerator (52) is connected to the second gear (53); the movement rod (55) meshes with the second gear (53) and is swingable under the drive of the second gear (53), the movement plate (54) is placed on the connection plate (22) of the fixing support (20) and capable of swinging inwards and outwards relative to the fixing support (20) under the drive of the movement rod (55), when the movement plate (54) is rotated out relative to the fixing support (20), the movement plate (54) forms a preset angle with an outside edge of the connection plate (22); the laser radar (60) is mounted on the movement plate (54).

2. The concealed corner laser radar integration device according to claim 1, wherein the fixing support (20) comprises first fixing plates (21) and a connection plate (22), the first fixing plates (21) are located at two sides of the connection plate (22), and the first fixing plates (21) are configured to be fixed to a front body longitudinal beam at an inner side of the fender (80) through bolts.

3. The concealed corner laser radar integration device according to claim 2, wherein the lifting structure (30) comprises a first motor (31), a transmission shaft (32), a first gear (33), a screw rod (34), a lifting rod (35), a sliding rail (36), a fixing block (37), and a second fixing plate (38); the sliding rail (36) inclines upward and inward from a lower part of the fixing support (20), a bottom end of the sliding rail (36) is fixed to the connection plate (22), and the fixing block (37) is arranged at a top end of the sliding rail (36); the screw rod (34) passes through the fixing block (37) and is arranged parallel to the sliding rail (36), the lifting rod (35) is arranged at a lower end of the screw rod (34), the first gear (33) is fixed at a top part of the screw rod (34), and the lifting rod (35) is connected to the cover plate (10); the first motor (31) and the controller (70) are fixed on the second fixing plate (38), the first motor (31) is connected to the transmission shaft (32), and the transmission shaft (32) meshes with the first gear (33).

4. The concealed corner laser radar integration device according to claim 3, wherein the fixing block (37) is connected to the screw rod (34) by screw thread; the lifting rod (35) comprises a first lifting rod (351) and a second lifting rod (352), the first lifting rod (351) is sleeved on and connected by screw thread to a lower end of the screw rod (34), and the second lifting rod (352) has one end connected to the first lifting rod (351) and another end fixedly connected to a bottom end of a side of the cover plate (10).

5. The concealed corner laser radar integration device according to any one of claims 1-4, further comprising a cleaning structure (40), wherein the cleaning structure (40) is arranged on the ejection structure (50) together with the laser radar (60).

6. The concealed corner laser radar integration device according to claim 5, wherein the cleaning structure (40) comprises a fixing bracket (41), an electromagnetic valve (42), a nozzle (43), a connection part (44), and a water inlet (45); the electromagnetic valve (42) has one end connected to the connection part (44) and another end connected to the water inlet (45), the water inlet (45) is configured to be connected to a pipeline which is connected to a waterway of an entire vehicle; the nozzle (43) is connected to the connection part (44) and has a telescoping function.

7. The concealed corner laser radar integration device according to any one of claims 1-4, wherein the ejection structure (50) comprises a sealing strip (56), the sealing strip (56) is mounted at a front side of the movement plate (54).

8. The concealed corner laser radar integration device according to claim 1, wherein the movement plate (54) is provided with a hole (541), the movement rod (55) comprises a first movement rod (551) and second movement rod (552), the second movement rod (552) is connected to the first movement rod (551) by a preset angle; a lower part of an end of the first movement rod (551) is provided with a convex column (5511), the convex column (5511) is clamped with the hole (541); the second movement rod (552) is arc-shaped, an outside section thereof is provided with teeth, the teeth mesh with the second gear (53).

9. The concealed corner laser radar integration device according to any one of claims 1-8, wherein one side of the laser radar (60) is fixed with a mirror (61), and the other side of the laser radar (60) is equipped with a second wire harness, the second wire harness is configured to be connected to an autonomous driving domain controller or an advanced auxiliary driving domain controller.

10. A vehicle, **characterised in that** it comprises the concealed corner laser radar integration device according to any one of claims 1-9.

## Patentansprüche

1. Vorrichtung zur verdeckten Integration eines Eck-Laserradars,
umfassend eine Abdeckplatte (10), eine Befestigungshalterung (20), eine Hebestruktur (30), eine Auswurfstruktur (50), ein Laserradar (60) und eine Steuerung (70), **dadurch gekennzeichnet, dass**
die Abdeckplatte (10) so eingerichtet ist, dass sie auf einem Kotflügel (80) einer Fahrzeugkarosserie angeordnet ist und hinsichtlich ihrer Größe zu einer Öffnung des Kotflügels (80) passt, wobei die Befestigungshalterung (20), die Hebestruktur (30), die Auswurfstruktur (50), das Laserradar (60) und die Steuerung (70) alle so eingerichtet sind, dass sie im Inneren des Kotflügels (80) angeordnet sind, wobei die Befestigungshalterung (20) eine Verbindungsplatte (22) umfasst, wobei die Hebestruktur (30) an der Befestigungshalterung (20) angeordnet und mit der Abdeckplatte (10) verbunden ist und so eingerichtet ist, dass sie die Abdeckplatte (10) unter Steuerung der Steuerung (70) nach oben und unten bewegt, wobei das Laserradar (60) auf der Auswurfstruktur (50) angeordnet ist, wobei die Auswurfstruktur (50) auf der Befestigungshalterung (20) angeordnet und so eingerichtet ist, dass sie sich unter der Steuerung der Steuerung (70) relativ zur Befestigungshalterung (20) nach außen bewegt, um das Laserradar (60) aus dem Inneren des Kotflügels (80) herauszuschieben;
und dass die Auswurfstruktur (50) einen zweiten Motor (51), ein Untersetzungsgetriebe (52), ein zweites Zahnrad (53), eine Bewegungsplatte (54) und eine Bewegungsstange (55) umfasst, wobei eine Abtriebswelle des zweiten Motors (51) mit dem Untersetzungsgetriebe (52) verbunden ist, wobei das Untersetzungsgetriebe (52) mit dem zweiten Zahnrad (53) verbunden ist, wobei die Bewegungsstange (55) in das zweite Zahnrad (53) eingreift und unter dem Antrieb des zweiten Zahnrads (53) schwenkbar ist, wobei die Bewegungsplatte (54) auf der Verbindungsplatte (22) der Befestigungshalterung (20) vorgesehen ist und unter dem Antrieb der Bewegungsstange (55) relativ zur Befestigungshalterung (20) nach innen und außen schwenkbar ist, wenn die Bewegungsplatte (54) relativ zur Befestigungshalterung (20) herausgedreht wird, wobei die Bewegungsplatte (54) mit einer Außenkante der Verbindungsplatte (22) einen voreingestellten Winkel bildet, wobei das Laserradar (60) auf der Bewegungsplatte (54) angebracht ist.

2. Vorrichtung zur verdeckten Integration eines Eck-Laserradars nach Anspruch 1, wobei die Befestigungshalterung (20) erste Befestigungsplatten (21) und eine Verbindungsplatte (22) umfasst, wobei die ersten Befestigungsplatten (21) an beiden Seiten der Verbindungsplatte (22) angeordnet sind und die ersten Befestigungsplatten (21) so eingerichtet sind, dass sie mittels Schrauben an einem vorderen Längsträger an einer Innenseite des Kotflügels (80) befestigt sind.

3. Vorrichtung zur verdeckten Integration eines Eck-Laserradars nach Anspruch 2, wobei die Hebestruktur (30) einen ersten Motor (31), eine Getriebewelle (32), ein erstes Zahnrad (33), eine Gewindestange (34), eine Hebestange (35), eine Gleitschiene (36), einen Befestigungsblock (37) und eine zweite Befestigungsplatte (38) umfasst, wobei die Gleitschiene (36) von einem unteren Teil der Befestigungshalterung (20) aus nach oben und nach innen geneigt verläuft, wobei ein unteres Ende der Gleitschiene (36) an der Verbindungsplatte (22) befestigt ist, wobei der Befestigungsblock (37) an einem oberen Ende der Gleitschiene (36) angeordnet ist, wobei die Gewindestange (34) durch den Befestigungsblock (37) verläuft und parallel zur Gleitschiene (36) angeordnet ist, wobei die Hebestange (35) an einem unteren Ende der Gewindestange (34) angeordnet ist, wobei das erste Zahnrad (33) an einem oberen Teil der Gewindestange (34) befestigt ist, wobei die Hebestange (35) mit der Abdeckplatte (10) verbunden ist, wobei der erste Motor (31) und die Steuerung (70) auf der zweiten Befestigungsplatte (38) befestigt sind, wobei der erste Motor (31) mit der Getriebewelle (32) verbunden ist, und wobei die Getriebewelle (32) in das erste Zahnrad (33) eingreift.

4. Vorrichtung zur verdeckten Integration eines Eck-Laserradars nach Anspruch 3, wobei der Befestigungsblock (37) über ein Gewinde mit der Gewindestange (34) verbunden ist, wobei die Hebestange (35) eine erste Hebestange (351) und eine zweite Hebestange (352) umfasst, wobei die erste Hebestange (351) auf einem unteren Ende der Gewindestange (34) aufgesteckt und über ein Gewinde mit diesem verbunden ist, wobei die zweite Hebestange (352) mit einem Ende an der ersten Hebestange (351) und mit einem anderen Ende fest mit einem unteren Ende einer Seite der Abdeckplatte (10) verbunden ist.

5. Vorrichtung zur verdeckten Integration eines Eck-Laserradars nach einem der Ansprüche 1 bis 4, die ferner eine Reinigungsstruktur (40) umfasst, wobei die Reinigungsstruktur (40) zusammen mit dem Laserradar (60) auf der Auswurfstruktur (50) angeordnet ist.

6. Vorrichtung zur verdeckten Integration eines Eck-Laserradars nach Anspruch 5, wobei die Reinigungsstruktur (40) einen Befestigungsbügel (41), ein Magnetventil (42), eine Düse (43), ein Verbindungsteil (44) und einen Wassereinlass (45) umfasst, wobei das Magnetventil (42) mit einem Ende an das Verbindungsteil (44) und mit einem anderen Ende an den Wassereinlass (45) angeschlossen ist, wobei der Wassereinlass (45) so eingerichtet ist, dass er mit einer Rohrleitung verbunden ist, die mit einem Wasserkreislauf eines gesamten Fahrzeugs verbunden ist, wobei die Düse (43) mit dem Verbindungsteil (44) verbunden ist und eine Teleskopfunktion aufweist.

7. Vorrichtung zur verdeckten Integration eines Eck-Laserradars nach einem der Ansprüche 1 bis 4, wobei die Auswurfstruktur (50) einen Dichtungsstreifen (56) umfasst, wobei der Dichtungsstreifen (56) an einer Vorderseite der Bewegungsplatte (54) angebracht ist.

8. Vorrichtung zur verdeckten Integration eines Eck-Laserradars nach Anspruch 1, wobei die Bewegungsplatte (54) mit einem Loch (541) versehen ist, wobei die Bewegungsstange (55) eine erste Bewegungsstange (551) und eine zweite Bewegungsstange (552) umfasst, wobei die zweite Bewegungsstange (552) in einem voreingestellten Winkel mit der ersten Bewegungsstange (551) verbunden ist, wobei ein unterer Teil eines Endes der ersten Bewegungsstange (551) mit einer konvexen Säule (5511) versehen ist, wobei die konvexe Säule (5511) mit dem Loch (541) eingeklemmt ist, wobei die zweite Bewegungsstange (552) bogenförmig ist, wobei ein Außenabschnitt davon mit Zähnen versehen ist, die in das zweite Zahnrad (53) eingreifen.

9. Vorrichtung zur verdeckten Integration eines Eck-Laserradars nach einem der Ansprüche 1 bis 8, wobei eine Seite des Laserradars (60) mit einem Spiegel (61) befestigt ist und die andere Seite des Laserradars (60) mit einem zweiten Kabelbaum versehen ist, wobei der zweite Kabelbaum so eingerichtet ist, dass er mit einer Steuerung für autonomen Fahrbereich oder einer Steuerung für erweiterten Fahrassistenzbereich verbunden ist.

10. Fahrzeug, **dadurch gekennzeichnet, dass**
es die Vorrichtung zur verdeckten Integration eines Eck-Laserradars nach einem der Ansprüche 1 bis 9 umfasst.

## Revendications

1. Dispositif d'intégration de radar laser de coin dissimulé
comprenant une plaque de couvercle (10), un support de fixation (20), une structure de levage (30), une structure d'éjection (50), un radar laser (60) et un dispositif de commande (70), **caractérisé en ce que**
la plaque de couvercle (10) est configurée pour être située sur une aile (80) d'une carrosserie de véhicule et pour s'adapter, en termes de dimensions, à une ouverture de l'aile (80) ; le support de fixation (20), la structure de levage (30), la structure d'éjection (50), le radar laser (60) et le dispositif de commande (70) sont tous configurés pour être situés à l'intérieur de l'aile (80) ; le support de fixation (20) comprend une plaque de liaison (22) ; la structure de levage (30) est disposée sur le support de fixation (20) et est reliée à la plaque de couvercle (10), et est configurée pour entraîner la plaque de couvercle (10) pour qu'elle se déplace vers le haut et vers le bas sous la commande du dispositif de commande (70) ; le radar laser (60) est disposé sur la structure d'éjection (50) ; la structure d'éjection (50) est disposée sur le support de fixation (20) et est configurée pour se déplacer vers l'extérieur par rapport au support de fixation (20) sous la commande du dispositif de commande (70) afin de pousser le radar laser (60) hors de l'intérieur de l'aile (80) ;
la structure d'éjection (50) comprend un second moteur (51), un décélérateur (52), un second engrenage (53), une plaque de déplacement (54) et une tige de déplacement (55) ; un arbre de sortie du second moteur (51) est relié au décélérateur (52), le décélérateur (52) est relié au second engrenage (53) ; la tige de déplacement (55) s'engrène avec le second engrenage (53) et peut pivoter sous l'entraînement du second engrenage (53) ; la plaque de déplacement (54) est placée sur la plaque de liaison (22) du support de fixation (20) et peut pivoter vers l'intérieur et vers l'extérieur par rapport au support de fixation (20) sous l'entraînement de la tige de déplacement (55) ; lorsque la plaque de déplacement (54) tourne vers l'extérieur par rapport au support de fixation (20), la plaque de déplacement (54) forme un angle prédéfini avec un bord extérieur de la plaque de liaison (22) ; le radar laser (60) est monté sur la plaque de déplacement (54).

2. Dispositif d'intégration de radar laser de coin dissimulé selon la revendication 1, dans lequel le support de fixation (20) comprend des premières plaques de fixation (21) et une plaque de liaison (22), les premières plaques de fixation (21) sont situées au niveau de deux côtés de la plaque de liaison (22), et les premières plaques de fixation (21) sont configurées pour être fixées à une poutre longitudinale de carrosserie avant au niveau d'un côté interne de l'aile (80), à l'aide de boulons.

3. Dispositif d'intégration de radar laser de coin dissimulé selon la revendication 2, dans lequel la structure de levage (30) comprend un premier moteur (31), un arbre de transmission (32), un premier engrenage (33), une tige filetée (34), une tige de levage (35), un rail coulissant (36), un bloc de fixation (37) et une seconde plaque de fixation (38) ; le rail coulissant (36) est incliné vers le haut et vers l'intérieur à partir d'une partie inférieure du support de fixation (20), une extrémité inférieure du rail coulissant (36) est fixée à la plaque de liaison (22), et le bloc de fixation (37) est disposé au niveau d'une extrémité supérieure du rail coulissant (36) ; la tige filetée (34) passe à travers le bloc de fixation (37) et est disposée parallèlement au rail coulissant (36), la tige de levage (35) est disposée au niveau d'une extrémité inférieure de la tige filetée (34), le premier engrenage (33) est fixé au niveau d'une partie supérieure de la tige filetée (34), et la tige de levage (35) est reliée à la plaque de couvercle (10) ; le premier moteur (31) et le dispositif de commande (70) sont fixés sur la seconde plaque de fixation (38), le premier moteur (31) est relié à l'arbre de transmission (32), et l'arbre de transmission (32) s'engrène avec le premier engrenage (33).

4. Dispositif d'intégration de radar laser de coin dissimulé selon la revendication 3, dans lequel le bloc de fixation (37) est relié à la tige filetée (34) par filetage ; la tige de levage (35) comprend une première tige de levage (351) et une seconde tige de levage (352), la première tige de levage (351) est manchonnée sur et reliée par filetage à une extrémité inférieure de la tige filetée (34), et la seconde tige de levage (352) présente une extrémité reliée à la première tige de levage (351) et une autre extrémité reliée de manière fixe à une extrémité inférieure d'un côté de la plaque de couvercle (10).

5. Dispositif d'intégration de radar laser de coin dissimulé selon l'une quelconque des revendications 1 à 4, comprenant en outre une structure de nettoyage (40), dans lequel la structure de nettoyage (40) est disposée sur la structure d'éjection (50) conjointement avec le radar laser (60).

6. Dispositif d'intégration de radar laser de coin dissimulé selon la revendication 5, dans lequel la structure de nettoyage (40) comprend une console de fixation (41), une électrovanne (42), une buse (43), une partie de raccordement (44) et une entrée d'eau (45) ; l'électrovanne (42) présente une extrémité raccordée à la partie de raccordement (44) et une autre extrémité raccordée à l'entrée d'eau (45), l'entrée d'eau (45) est configurée pour être raccordée à une conduite qui est raccordée à un circuit d'eau de l'ensemble du véhicule ; la buse (43) est raccordée à la partie de raccordement (44) et présente une fonction télescopique.

7. Dispositif d'intégration de radar laser de coin dissimulé selon l'une quelconque des revendications 1 à 4, dans lequel la structure d'éjection (50) comprend une bande d'étanchéité (56), la bande d'étanchéité (56) est montée au niveau d'un côté avant de la plaque de déplacement (54).

8. Dispositif d'intégration de radar laser de coin dissimulé selon la revendication 1, dans lequel la plaque de déplacement (54) est pourvue d'un trou (541), la tige de déplacement (55) comprend une première tige de déplacement (551) et une seconde tige de déplacement (552), la seconde tige de déplacement (552) est reliée à la première tige de déplacement (551) selon un angle prédéfini ; une partie inférieure d'une extrémité de la première tige de déplacement (551) est pourvue d'une colonne convexe (5511), la colonne convexe (5511) est serrée dans le trou (541) ; la seconde tige de déplacement (552) est en forme d'arc, une section extérieure de celle-ci est pourvue de dents, les dents s'engrènent avec le second engrenage (53).

9. Dispositif d'intégration de radar laser de coin dissimulé selon l'une quelconque des revendications 1 à 8, dans lequel un côté du radar laser (60) est pourvu d'un miroir (61), et l'autre côté du radar laser (60) est pourvu d'un second faisceau de câbles, le second faisceau de câbles est configuré pour être relié à un dispositif de commande de domaine de conduite autonome ou à un dispositif de commande de domaine de conduite assistée avancée.

10. Véhicule, **caractérisé en ce que**
il comprend le dispositif d'intégration de radar laser de coin dissimulé selon l'une quelconque des revendications 1 à 9.
